# EUROPÄISCHE PATENTSCHRIFT

(11) **EP 0 976 922 B1**
(45) Veröffentlichungstag und Bekanntmachung des Hinweises auf die Patenterteilung: **04.01.2006**
(21) Anmeldenummer: 99112310.0
(22) Anmeldetag: 26.06.1999
(51) Int. Cl.: F02D 43/00, F02D 41/18, F02D 41/14, F02D 33/00

(54) **Verfahren zur Drehmomenteinstellung**
Method for torque adjustment
Méthode d'ajustement de couple moteur

(30) Priorität: 29.07.1998 DE 19834137
(43) Veröffentlichungstag der Anmeldung: 02.02.2000
(73) Patentinhaber: DaimlerChrysler AG, 70567 Stuttgart (DE)
(72) Erfinder: Armstrong, Neil, Dr., 70327 Stuttgart (DE); Braun, Hans, 70378 Stuttgart (DE); Scherer, Matthias, 73730 Esslingen (DE)

(56) Entgegenhaltungen:
- DE-A- 3 118 425
- DE-A- 4 141 947
- DE-A- 4 207 541
- DE-C- 4 315 885
- PATENT ABSTRACTS OF JAPAN vol. 012, no. 195 (M-705), 7. Juni 1988 (1988-06-07) & JP 63 001742 A (NIPPON DENSO CO LTD), 6. Januar 1988 (1988-01-06)

## Beschreibung

Die Erfindung betrifft ein Verfahren zur Einstellung eines Soll-Drehmomentes an einer Brennkraftmaschine.

Zur Erzielung eines beispielsweise vom Fahrer oder von einer elektronischen Motorsteuerung gewünschten, bestimmten Fahrverhaltens eines Kraftfahrzeuges ist eine möglichst rasche und präzise Einstellung eines bestimmten Sollausgangsdrehmomentes (Soll-Moment) einer Brennkraftmaschine des Fahrzeuges erforderlich. Zur Einstellung des gewünschten Soll-Momentes wird üblicherweise zunächst eine Luftmenge oder Luftmasse ermittelt, die der Brennkraftmaschine zugeführt werden muß, um das gewünschte Soll-Moment zu erreichen. Für eine in einem Luftansaugstrang angeordnete Drosselklappe, mit der die der Brennkraftmaschine zugeführte Luftmasse einstellbar ist, wird aus dem ermittelten Luftmassenwert ein Drosselklappenwinkel ermittelt und dieser mit Hilfe einer entsprechenden Stelleinrichtung an der Drosselklappe eingestellt.

Da es sich bei der Zuführung von Luft und Kraftstoff zur Verbrennung in einer Brennkraftmaschine um Strömungsvorgänge handelt, ist im folgenden unter einer "Masse" stets ein Massenstrom, d.h. eine Masse pro Zeiteinheit, zu verstehen.

Insbesondere Brennkraftmaschinen, die nach dem Otto-Prinzip arbeiten, sind üblicherweise luftgeführt, d.h. die der Verbrennung zugeführte Kraftstoffmenge richtet sich nach der der Verbrennung zugeführten Luftmenge. Zu diesem Zweck weist eine solche Brennkraftmaschine einen Luftmassensensor auf, mit dem die der Verbrennung zugeführte Luftmasse gemessen wird, um eine daran angepaßte Kraftstoffmenge, beispielsweise über eine Kraftstoffeinspritzanlage, der Brennkraftmaschine zuzuleiten.

Die Ermittlung eines Drosselklappenwinkels aus einer Luftmasse erfolgt üblicherweise mit Hilfe einer kennfeldmäßigen Zuordnung, beispielsweise in Abhängigkeit der Drehzahl der Brennkraftmaschine. Diese Zuordnung von einem Moment zu einer Luftmasse und von einer Luftmasse zu einem Drosselklappenwinkel wird als Steuerpfad bezeichnet.

Da insbesondere die tatsächlichen Betriebsbedingungen der Brennkraftmaschine von den Randbedingungen abweichen, unter denen derartige Kennfelder im Versuch aufgenommen worden sind, weicht die tatsächlich der Verbrennung zugeführte Luftmasse von der zur Erzielung des gewünschten Soll-Momentes erforderlichen Luftmasse häufig ab, so daß auch das tatsächlich eingestellte Ist-Moment vom erforderlichen Soll-Moment abweicht. Um hier Abhilfe zu schaffen, sind verschiedene Regelungsverfahren bekannt, bei denen ein Luftmassen-Soll-Ist-Wert-Vergleich durchgeführt wird. Aufgrund der dann festgestellten Abweichung zwischen Soll-Luftmasse und Ist-Luftmasse wird dann der Drosselklappenwinkel nachgestellt. Dieser Vergleich mit daran anschließender Nachstellung erfolgt im Sinne einer Regelung solange, bis die Ist-Luftmasse mit der Soll-Luftmasse übereinstimmt.

Aus der DE 43 15 885 C1 ist ein Verfahren zur Drehmomenteinstellung bekannt, bei dem aus einem Soll-Moment ein Massenstrom-Sollwert für die der Verbrennung zuzuführende Luft und der gemessene Istwert durch eine Ansteuerung des Drosselklappenöffnungswinkels auf den jeweiligen Sollwert eingeregelt wird. Der jeweilige Istwert wird dabei durch einen Luftmassensensor ermittelt, der stromauf einer Drosselklappe in einem Ansaugrohr der Brennkraftmaschine angeordnet ist.

Der Betrieb eines Kraftfahrzeuges muß in der Regel ständig wechselnden Randbedingungen angepaßt werden, insbesondere müssen ständig neue Werte für ein anderes erforderliches Soll-Moment eingestellt werden, so daß der Regelbedarf für eine Angleichung der Ist-Luftmasse an die Soll-Luftmasse sehr hoch ist, woher dann üblicherweise permanent eine intensive Regelung des Drosselklappenwinkels stattfindet. Auf diese Weise werden die Drosselklappe und die zugehörigen Drosselklappenverstellmittel in hohem Maße beansprucht. Außerdem benötigt die Einregelung der gewünschten Soll-Luftmasse Zeit, und zwar regelmäßig so viel Zeit, daß sich die gewünschte Soll-Luftmasse inzwischen wieder geändert hat. Aufgrund dieser Tatsache "hinkt" die Drosselklappenwinkelregelung regelmäßig der gewünschten Soll-Luftmasse hinterher.

Darüber hinaus hängt die Einstellung eines gewünschten Soll-Momentes in erster Linie von der Güte des ermittelten Wertes für die Ist-Luftmasse ab. Die üblicherweise zur Bestimmmung der Luftmasse verwendeten Luftmeßsensoren sind jedoch Alterungserscheinungen sowie Verschmutzungen ausgesetzt, so daß die ermittelten Ist-Luftmassen im Laufe der Zeit immer mehr von der tatsächlichen Luftmasse abweichen. Außerdem können durch Ermüdungserscheinungen od.dgl. im Ansaugstrang Leckagen und andere Einflüsse auftreten, durch die die gemessene Ist-Luftmasse von der tatsächlich der Brennkraftmaschine zur Verbrennung zugeführten Luftmasse abweicht.

Die vorliegende Erfindung beschäftigt sich mit dem Problem, ein Verfahren zur Drehmomenteinstellung der eingangs genannten Art so auszugestalten, daß die Luftmasse mit nahezu gleichbleibender Güte ermittelt werden kann, wobei insbesondere der Regelungsaufwand zur Einstellung eines Soll-Momentes reduziert werden kann.

Dieses Problem wird erfindungsgemäß durch ein Verfahren mit den Merkmalen des Anspruches 1 gelöst.

Die Erfindung beruht auf dem allgemeinen Gedanken, die Zuordnung eines Drosselklappenwinkels zur einer gewünschten Soll-Luftmasse durch einen Vergleich mit der tatsächlich der Verbrennung zugeführten Ist-Luftmasse adaptiv zu korrigieren. Ein entsprechendes Verfahren ist in DE 41 41 947 A1 beschrieben. Die Adaption des Steuerpfades kann dabei multiplikativ oder additiv erfolgen. Diese Adaption wirkt permanent, bis eine neue Adaption durchgeführt wird. Wenn dann ein Soll-Moment dem adaptierten Steuerpfad folgt, wird der zugehörigen Soll-Luftmasse sofort ein korrigierter Drosselklappenwinkel zugeordnet, aus dem dann regelmäßig eine Ist-Luftmasse resultiert, die von Anfang an, d.h. noch ohne Regelung, näher an der gewünschten Soll-Luftmasse liegt, als dies der Fall wäre, wenn der Drosselklappenwinkel anhand des unveränderten, also nicht adaptierten, Steuerpfades ermittelt worden wäre. Folglich reduziert sich durch diese Maßnahme der Regelungsbedarf in einem beträchtlichen Maße, wodurch die mechanische Beanspruchung der betreffenden Bauteile reduziert wird. Außerdem wird der gewünschte Soll-Wert für die Luftmasse bzw. für das Moment deutlich schneller erreicht, wodurch sich das gewünschte Betriebsverhalten für das Fahrzeug rasch einstellen kann.

Um von Alterungserscheinungen, Veränderungen in der Ansaugströmung und Leckagen im Ansaugstrang unabhängig zu sein, wird die tatsächlich der Verbrennung zugeführte Ist-Luftmasse erfindungsgemäß anhand des Kraftstoff/Luft-Massenverhältnisses des der Verbrennung zugeführten Gemisches sowie der in diesem Gemisch enthaltenen Kraftstoffmasse bestimmt.

Ein entsprechendes Verfahren ist in DE 41 41 947 A1 beschrieben

Da moderne Brennkraftmaschinen in der Regel mit einer Kraftstoffeinspritzanlage ausgestattet sind, wird die Kraftstoffmasse anhand von Betriebs-Parametern, insbesondere anhand der Einspritzdauer und/oder des Einspritzdruckes, einer solchen Kraftstoffeinspritzanlage ermittelt. Auf diese Weise kann das erfindungsgemäße Verfahren auf eine an der Brennkraftmaschine bereits vorhandene Sensorik zurückgreifen, so daß diesbezüglich keine Kosten und kein zusätzliches Gewicht entstehen.

Eine Brennkraftmaschine ist üblicherweise nur für die Verwendung einer bestimmten Kraftstoffart, wie z.B. Super-Bleifrei, Benzin-Bleifrei, vorgesehen. Folglich ist beispielsweise das Verhältnis zwischen Kraftstoffmasse und Luftmasse für eine stöchiometrische Verbrennung in der Brennkraftmaschine bekannt. Daher kann das Kraftstoff/Luft-Massenverhältnis auch anhand eines Stöchiometriewertes der Verbrennung, der üblicherweise als λ-Wert bezeichnet wird (z.B. liegt bei λ = 1 eine stöchiometrische Verbrennung vor), ermittelt werden, wobei zur Bestimmung des λ-Wertes eine herkömmliche λ-Sonde verwendet werden kann.

Entsprechend einer Weiterbildung des erfindungsgemäßen Verfahrens kann das Kraftstoff/Luft-Massenverhältnis des Gemisches daher anhand von Signalen eines Sensors ermittelt werden, wobei dieser Sensor vorzugsweise eine in einem Abgasstrang der Brennkraftmaschine angeordnete Sonde, insbesondere eine λ-Sonde ist, welche die Zusammensetzung von aus der Brennkraftmaschine austretenden Abgasen ermittelt.

Bei vielen Fahrzeugen ist eine λ-Sonde bereits im Abgasstrang vorhanden. Die λ-Sonde dient dort zur Analyse der Abgaszusammensetzung, um beispielsweise besonders niedrige Schadstoffemissionswerte zu erzielen. Wenn jedoch die Abgaszusammensetzung bekannt ist, kann auch das Kraftstoff/Luft-Massenverhältnis angegeben werden.

Bei Fahrzeugen, die eine λ-Regelung zur Reduzierung der Schadstoffemissionen aufweisen, wird regelmäßig aus dem über die λ-Sonde ermittelte Kraftstoff/Luft-Massenverhältnis eine Stellgröße für die Einspritzanlage ermittelt, um den λ-Wert der Abgase auf einen gewünschten Wert einzustellen bzw. einzuregeln.

Somit kann zur Durchführung des erfindungsgemäßen Verfahrens wiederum auf bereits am Fahrzeug vorhandene Mittel, z.B. eine λ-Regelung bzw. eine λ-Sonde, zurückgegriffen werden. Auch hier fallen dann keine zusätzlichen Kosten oder zusätzliches Gewicht an.

Gemäß einer zweckmäßigen Ausgestaltungsform des erfindungsgemäßen Verfahrens kann bei einer Brennkraftmaschine, die bereits mit einem herkömmlichen Luftmassensensor im Ansaugstrang ausgestattet ist, die durch diesen Luftmassensensor gemessene Luftmasse mit der aus dem Kraftstoff/Luft-Massenverhältnis und aus der Kraftstoffmasse ermittelten Luftmasse verglichen werden. Dabei festgestellte Abweichungen können dann zur Diagnose des Ansaugstranges und/oder des Luftmassensensors ausgewertet werden.

Beim erfindungsgemäßen Verfahren kann die Ist-Luftmasse, die für den Luftmassen-Soll-Ist-Wert-Vergleich verwendet wird, unter Zuhilfenahme der Kraftstoffmasse und des Kraftstoff/Luft-Massenverhältnisses des Gemisches direkt oder indirekt ermittelt werden.

Bei einer bevorzugten Ausführungsform des erfindungsgemäßen Verfahren erfolgt die Bestimmung der Ist-Luftmasse direkt, wobei dann aus der Kraftstoffmasse und dem Kraftstoff/Luft-Massenverhältnis ein Ist-Luftmassenwert berechnet wird, der die Ist-Luftmasse für den Luftmassen-Soll-Ist-Wert-Vergleich repräsentiert. Bei einer derartigen Ausführungsform kann zumindest für die Zwecke der Adaption des Steuerpfades vollständig auf einen herkömmlichen Luftmassensensor verzichtet werden.

Im Unterschied dazu kann bei einer alternativen Ausführungsform die Ist-Luftmasse indirekt bestimmt werden, wobei dann zur Bestimmung der Ist-Luftmasse erstens mittels eines Luftmassensensors ein Luftmassenwert gemessen wird, zweitens aus der Kraftstoffmasse und dem Kraftstoff-Luft-Massenverhältnis ein Referenzluftmassenwert berechnet wird, drittens der gemessene Luftmassenwert anhand des berechneten Referenzluftmassenwertes korrigiert wird und viertens ein Ist-Luftmassenwert gebildet wird, der die Ist-Luftmasse für den Luftmassen-Soll-Ist-Wert-Vergleich repräsentiert. Diese Ausführungsform kann besonders einfach an bereits vorhandene Einrichtungen zum Einstellen eines Drehmomentes anknüpfen bzw. mit diesen zusammenarbeiten. Außerdem kann durch diese Maßnahme bereits das Meßsignal des Luftmassensensors an sensorseitige Alterungs- und Verschmutzungserscheinungen angepaßt werden.

Dies ist insbesondere bei luftgeführten Brennkraftmaschinen von erheblichem Vorteil. Denn die der Verbrennung zugeführte Kraftstoffmasse hängt bei luftgeführten Brennkraftmaschinen direkt von der am Luftmassensensor gemessenen Luftmasse und nur indirekt von der Drosselklappenstellung ab. Ein fehlerhaft arbeitender Luftmassensensor hat dann eine fehlerhafte Kraftstoffmasse zur Folge, wodurch das erwünschte Soll-Moment auch nicht mit einer Regelung erreicht werden kann.

Durch die vorgeschlagene Maßnahme kann ein Abgleich bzw. eine Eichung des Luftmassensensors durchgeführt werden.

Durch die vorgenannte, insbesondere permanent wirkende, Korrektur des Signalwertes des Luftmassensensors ergibt sich dann die für diese Luftmasse vorgesehene Kraftstoffmasse. Auch ist dann wieder eine in Abhängigkeit des Luftmassensensors durchgeführte Regelung zur Einstellung des gewünschten Soll-Momentes durchführbar.

Bei einer Brennkraftmaschine mit λ-Regelung wird, wie oben bereits dargelegt, in Abhängigkeit der Abgaszusammensetzung die Kraftstoffzufuhr beeinflußt, bis eine gewünschte Abgaszusammensetzung eingeregelt ist. Wenn aufgrund eines fehlerhaften Luftmassensensors von Anfang an eine für die tatsächlich der Verbrennung zugeführte Luftmasse ungeeignete Kraftstoffmasse der Verbrennung zugeführt wird, ist der Regelungsaufwand dieser λ-Regelung hoch. Durch den erfindungsgemäß vorgeschlagenen Abgleich des Luftmassensensors führt die durch die Luft geführte Kraftstoffeinspritzung der Verbrennung zugeführte Kraftstoffmasse von Anfang an zu einer Verbrennung, die im wesentlichen die erwünschte Abgaszusammensetzung ergibt, so daß der Regelungsaufwand der λ-Regelung deutlich reduziert werden kann. Dies erhöht die Lebensdauer der davon betroffenen Bauteile.

Entsprechend einer besonders vorteilhaften Ausführungsform des erfindungsgemäßen Verfahrens wird die Ermittlung der dem Luftmassen-Soll-Ist-Wert-Vergleich zugrundeliegenden Ist-Luftmasse nur dann durchgeführt, wenn die Brennkraftmaschine einen stationären oder quasistationären Betriebszustand aufweist. Bei einem derartigen Betriebszustand ist insbesondere ausreichend Zeit vorhanden, um die gewünschten Soll-Werte für beispielsweise die Luftmasse, die Abgaszusammensetzung, die Kraftstoffmasse und auch für das Moment, auszuregeln. Dadurch weist die ermittelte Ist-Luftmasse eine hohe Genauigkeit auf, so daß auch die Adaption des Steuerpfades entsprechend genau durchgeführt werden kann, wodurch insbesondere der Regelungsaufwand für nachfolgende andere Betriebszustände deutlich reduziert wird und sich insgesamt das Betriebsverhalten der Brennkraftmaschine verbessert.

Gemäß einer bevorzugten Ausführungsform des erfindungsgemäßen Verfahrens kann die Ermittlung der Ist-Luftmasse bei Vorliegen einer stöchiometrischen Verbrennung des der Brennkraftmaschine zugeführten Gemisches erfolgen, da in diesem Zustand eine weitestgehend exakte Berechnung der Luftmasse aus der Kraftstoffmasse ohne weiteres durchführbar ist.

Weitere wichtige Merkmale und Vorteiles des erfindungsgemäßen Verfahrens ergeben sich aus den Unteransprüchen, aus der nachfolgenden Figur und aus der zugehörigen Figurenbeschreibung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.

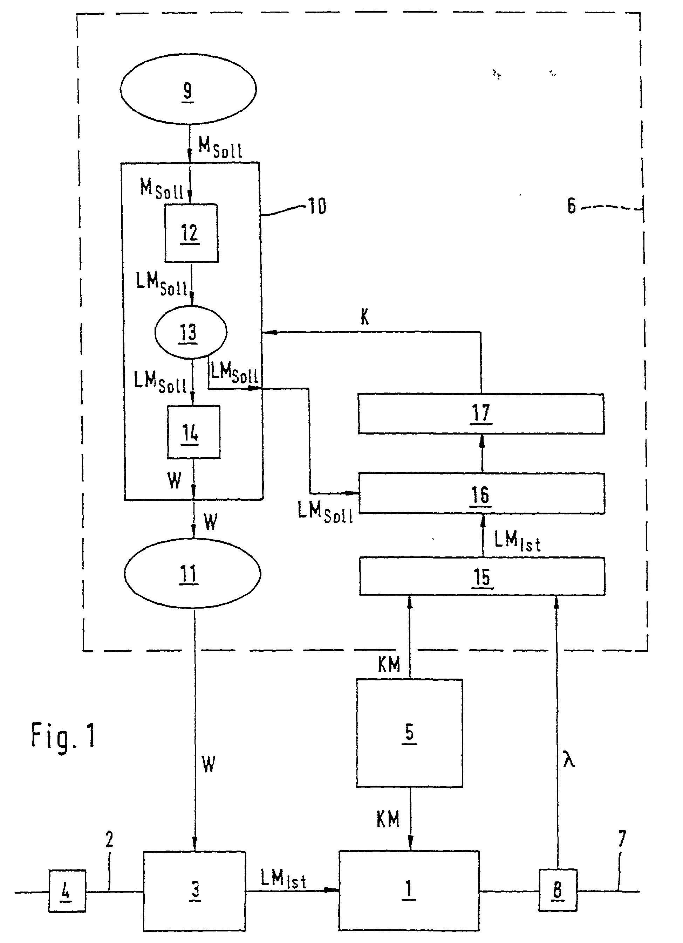

Fig. 1 zeigt eine schematische Prinzipdarstellung für eine Brennkraftmaschine, die nach dem erfindungsgemäßen Verfahren betrieben wird.

Entsprechend Fig. 1 saugt eine Brennkraftmaschine 1 durch einen daran angeschlossenen Ansaugstrang 2 Luft für die Verbrennung an. Im Ansaugstrang 2 ist eine Drosselklappe 3 angeordnet, mit der die den Ansaugstrang 2 durchströmende Luftmenge bzw. Luftmasse LM eingestellbar ist. Vor der Drosselklappe 3 ist im Ansaugstrang 2 ein Luftmassensensor 4 angeordnet, mit dem auf konventionelle Art und Weise die der Brennkraftmaschine 1 zugeführte Luftmasse LM gemessen werden kann.

Bei einer luftgeführten Brennkraftmaschine 1 wird in Abhängigkeit der vom Luftmassensensor 4 ermittelten Luftmasse LM eine Kraftstoffmasse KM ermittelt und in Form eines entsprechenden Signales an eine Kraftstoffeinspritzanlage 5 weitergeleitet.

Wie an vorstehender Stelle ist auch im folgenden durch die Bezugnahme auf eine physikalische Größe jeweils auch ein Bezug auf den damit korrelierenden Signalwert gemeint.

Die Kraftstoffeinspritzanlage 5 führt dann der Brennkraftmaschine 1 die ermittelte Kraftstoffmasse KM zu. Die Ermittlung der erforderlichen Kraftstoffmasse KM wird dabei üblicherweise in einer elektronischen Motorsteuerung 6 durchgeführt, in der die dazu erforderlichen Mittel, wie Rechner, Speicher u.dgl. enthalten sind (nicht dargestellt). Die diesbezüglich erforderlichen Signalleitungen u.dgl. sind zur Bewahrung der Übersichtlichkeit in Fig. 1 nicht dargestellt.

An die Brennkraftmaschine 1 ist stromab ein Abgasstrang 7 angeschlossen, in dem ein Sensor 8 zur Ermittlung der Abgaszusammensetzung angeordnet ist. Ein derartiger Sensor 8 ist üblicherweise eine λ-Sonde, über die die Abgaszusammensetzung und daraus der stöchiometrische Wert bzw. der λ-Wert des der Brennkraftmaschine 1 zugeführten Gemisches aus Kraftstoff und Luft ermittelt werden kann. Eine solche λ-Sonde 8 wird üblicherweise im Zusammenhang mit einer im Abgasstrang 7 angeordneten, nicht dargestellten Abgasreinigungsanlage verwendet.

Die Schadstoffemissionswerte der Brennkraftmaschine 1 sind besonders günstig, wenn die der Abgasreinigungsanlage zugeführten Abgase eine vorbestimmte Zusammensetzung, d.h. einen vorbestimmten λ-Wert, aufweisen. Die Zusammensetzung der Abgase hängt direkt von der Zusammensetzung des der Verbrennung zugeführten Gemisches ab, so daß eine moderne Abgasreinigungsanlage üblicherweise über eine sogenannte λ-Regelung verfügt, mit der direkt die Zusammensetzung des der Verbrennung zugeführten Gemisches und somit indirekt die Zusammensetzung der Abgase auf den vorbestimmten λ-Wert eingeregelt werden kann. Zu diesem Zweck beeinflußt die λ-Regelung bei einer luftgeführten Brennkraftmaschine 1 die der Verbrennung zugeführte Kraftstoffmasse KM, um dadurch die Gemischzusammensetzung zu verändern. Die dazu erforderlichen Mittel sind üblicherweise wieder in der Motorsteuerung 6 untergebracht, wobei auch hier aus Gründen der Übersichtlichkeit die zugehörigen Steuerleitungen u.dgl. nicht dargestellt sind.

Aufgrund eines Fahrerwunsches oder durch die Anforderungen von elektronischen Systemen zur Beeinflussung der Fahreigenschaften eines mit der Brennkraftmaschine 1 ausgestatteten Fahrzeuges wird der Motorsteuerung 6 ein Soll-Moment M_{Soll} vorgegeben, das zu diesem Zweck in Form eines entsprechenden Signalwertes einem Eingang 9 der Motorsteuerung 6 mitgeteilt wird. In der Motorsteuerung 6 wird das Soll-Moment M_{Soll}, d.h. ein damit korrelierendes Signal, einem Steuerpfad 10 zugeführt, in welchem dem Soll-Moment ein Drosselklappenwinkel W zugeordnet wird, der dann vom Steuerpfad 10 an eine Ausgabe 11 der Motorsteuerung 6 in Form eines entsprechenden Signalwertes weitergeleitet wird.

Für die Zuordnung des Soll-Momentes zu einem bestimmten Drosselklappenwinkel W ist im Steuerpfad 10 in der gezeigten Ausführungsform ein erstes Kennfeld 12 vorgesehen, in dem einem eingehenden Moment eine für dessen Erzielung erforderliche Luftmasse LM, beispielsweise in Abhängigkeit der aktuellen Drehzahl der Brennkraftmaschine 1 zugeordnet wird. Dem in das erste Kennfeld 12 eingegebenen Soll-Moment M_{Soll} wird demnach eine Soll-Luftmasse LM_{Soll} zugeordnet, die in einem Zwischenspeicher 13 abgelegt wird. Der Zwischenspeicher 13 leitet die Soll-Luftmasse LM_{Soll} dann an ein zweites Kennfeld 14 weiter, in dem eine Zuordnung von einer Luftmasse LM zu einem Drosselklappenwinkel W durchgeführt wird.

Der von dem Steuerpfad 10 an den Ausgang 11 der Motorsteuerung 6 weitergeleitete Drosselklappenwinkel W wird dann an die Drosselklappe 3 weitergeleitet, an der dann mittels entsprechender Einstellmittel der geforderte Drosselklappenwinkel eingestellt wird. Der an der Drosselklappe 3 eingestellte Drosselklappenwinkel W soll dann die erwünschte Soll-Luftmenge LM_{Soll} der Brennkraftmaschine 1 zuführen.

Die der Brennkraftmaschine 1 zugeführte Luftmenge LM wird dann (siehe oben) vom Luftmassensensor 4 gemessen, wobei aufgrund des luftgeführten Motorbetriebes die zugehörige Kraftstoffmasse KM der Brennkraftmaschine 1 zur Bildung des Gemisches zugeführt wird. Diese Kraftstoffmasse kann sich dann noch durch die vorgenannte λ-Regelung zur Erzielung der erwünschten Abgaswerte ändern.

Da die real im Ansaugstrang 2 herrschenden Strömungsbedingungen nicht immer mit den zur Aufnahme des zweiten Kennfeldes 14 vorliegenden Randbedingungen übereinstimmen, kann es dazu kommen, daß der ermittelte Drosselklappenwinkel W nicht zu der erwünschten Soll-Luftmasse LM_{Soll} sondern zu einer davon verschiedenen Ist-Luftmasse LM_{Ist} führt. Außerdem ist der Zusammenhang zwischen Moment und Luftmasse im ersten Kennfeld 12 zusätzlich von der der Verbrennung zugeführten Kraftstoffmasse KM abhängig, die jedoch, wie gezeigt, der λ-Regelung unterworfen ist, so daß eine geringfügige Abweichung der Ist-Luftmasse von der Soll-Luftmasse über die λ-Regelung eine geringfügige Änderung der für die Soll-Luftmasse vorgesehenen Kraftstoffmasse KM nach sich zieht, die dann zu einer merklichen Änderung des erzielten Ist-Momentes führt.

Darüber hinaus ist der Luftmassensensor 4 im Laufe der Zeit Verschmutzungen und Verschleiß ausgesetzt, so daß der damit ermittelte Luftmassenwert regelmäßig zu einer für das Moment und für die Abgaszusammensetzung ungeeigneten Kraftstoffmasse KM führt.

Erfindungsgemäß sind Mittel vorgesehen, durch die die Motorsteuerung 6 erkennt, wenn ein stationärer oder quasistationärer Betriebszustand der Brennkraftmaschine 1 vorliegt. Diese Mittel bestehen im wesentlichen in der Abfrage verschiedener Randbedingungen, die bei entsprechender Konstellation der Motorsteuerung 6 die Schlußfolgerung erlauben, daß ein stationärer oder ein nahezu stationärer Betriebszustand der Brennkraftmaschine 1 vorliegt. Als Randbedingungen kommen beispielsweise in Frage: das Vorliegen einer konstanten Motordrehzahl während eines längeren Zeitraumes, das Vorliegen eines vorbestimmten λ-Wertes (z.B. λ = 1, was einer stöchiometrischen Verbrennung entspricht) während eines längeren Zeitraumes, das Vorliegen bestimmter Werte für den Zündwinkel oder eine Abgasrückführung.

Wenn die Motorsteuerung 6 das Vorliegen eines solchen stationären Betriebzustandes feststellt, wird in einer ersten Stufe 15 die Ist-Luftmasse LM_{Ist} bestimmt. Als Stufe wird hierbei ein Verfahrensschritt des erfindungsgemäßen Verfahrens zur Drehmomenteinstellung bezeichnet. Diese Stufen können dabei als feste Schaltungen einer Platine oder als Programmteile eines Rechners in der Motorsteuerung enthalten sein.

Der ersten Stufe 15 wird zunächst die Kraftstoffmasse KM mitgeteilt, die von der Kraftstoffeinspritzanlage 5 der Verbrennung zugeführt wird. Dabei muß nicht wie im dargestellten Ausführungsbeispiel ein entsprechender Signalwert von der Kraftstoffeinspritzanlage 5 an die erste Stufe 15 übertragen werden, ebenso können die entsprechenden Daten bereits in der Motorsteuerung 6 enthalten sein. Außerdem erhält die erste Stufe 15 von der λ-Sonde 8 den aktuellen λ-Wert mitgeteilt. Auch hierzu bedarf es keiner separaten Signalleitung, da der λ-Wert beispielsweise bereits im Rahmen der λ-Regelung der Motorsteuerung 6 mitgeteilt worden ist.

Bei Kenntnis der von der Brennkraftmaschine 1 verwendeten Kraftstoffart kann aus der Kraftstoffmasse und dem aus dem λ-Wert bestimmbaren Kraftstoff/Luft-Massen-Verhältnis des der Brennkraftmaschine 1 zugeführten Gemisches die Ist-Luftmasse ermittelt werden.

Die Ist-Luftmasse LM_{Ist} wird daraufhin einer zweiten Stufe 16 mitgeteilt, in der ein Luftmassen-Soll-Ist-Wert-Vergleich durchgeführt wird. Zu diesem Zweck leitet der Steuerpfad 10 den im Zwischenspeicher 13 abgelegten Wert für die Soll-Luftmasse LM_{Soll} der zweiten Stufe 16 zu.

Das Ergebnis dieses Vergleiches wird einer dritten Stufe 17 zugeleitet, in der dann die Bestimmung eines geeigneten Korrekturwertes K durchgeführt wird. Der auf diese Weise ermittelte Korrekturwert K dient dann der Adaption des Steuerpfades 10. Diese Adaption des Steuerpfades 10 bewirkt eine bleibende Veränderung bzw. Korrektur der Zuordnung zwischen dem in den Steuerpfad 10 eingehenden Moment M_{Soll} und dem durch den Steuerpfad 10 ausgegebenen Drosselklappenwinkel W. Vorzugsweise wird dabei im Steuerpfad 10 der dem zweiten Kennfeld 14 zugeführte Wert der Luftmasse LM_{Soll} verändert.

Aufgrund der erfindungsgemäßen Adaption des Steuerpfades 10 erfolgt auch in anderen Betriebszuständen und bei anderen Soll-Momenten eine adaptierte Zuordnung eines Drosselklappenwinkels W. Dadurch werden z.B. Abweichungen zwischen den tatsächlichen Randbedingungen beim Betrieb der Brennkraftmaschine 1 und den Randbedingungen, die bei der Aufnahme des zweiten Kennfeldes 14 vorlagen, eliminiert. Außerdem können dadurch Verschmutzungen und Verschleißerscheinungen des Luftmassensensors 4 ausgeglichen werden. Der insgesamt erforderliche Regelaufwand, um beispielsweise ein gewünschtes Moment und eine gewünschte Abgaszusammensetzung einzuregeln, wird dadurch verringert. Gleichzeitig verkürzt sich dadurch die erforderliche Regelzeit, so daß schneller das Regelziel erreicht werden kann.

## Patentansprüche

1. Verfahren zur Drehmomenteinstellung an einer Brennkraftmaschine,
wobei ein Steuerpfad (10) vorgesehen ist, in dem eine Zuordnung von einem Moment (M) zu einer Luftmasse (LM) sowie von einer Luftmasse (LM) zu einer Drosselklappenstellung (W) erfolgt,
wobei mittels des Steuerpfades (10) aus einem einzustellenden Soll-Moment (M_{Soll}) eine Soll-Luftmasse (LM_{Soll}) ermittelt und eine zugehörige Drosselklappenstellung (W) ermittelt und eingestellt wird,
wobei eine der Brennkraftmaschine (1) zur Verbrennung zugeführte Ist-Luftmasse (LM_{Ist}) ermittelt wird,
wobei durch einen Luftmassen-Soll-Ist-Wert-Vergleich eine Abweichung zwischen Soll-Luftmasse (LM_{Soll}) und Ist-Luftmasse (LM_{Ist}) bestimmt wird,
wobei für diese Abweichung ein Korrekturwert (K) ermittelt wird, mit dem eine Adaption des Steuerpfades (10) an die Abweichung erfolgt, derart, daß im Steuerpfad (10) einem einzustellenden Soll-Moment (M_{Soll}) dann eine entsprechend angepaßte Drosselklappenstellung (W) zugeordnet wird, die eine Kompensation der zuvor bestimmten Abweichung zwischen Soll-Luftmasse (LM_{Soll}) und Ist-Luftmasse (LM_{Ist}) bewirkt,
**dadurch gekennzeichnet,**
- **daß** zur Bestimmung der Ist-Luftmasse (LM_{Ist}) eine aktuelle, der Brennkraftmaschine (1) zur Verbrennung zugeführte Kraftstoffmasse (KM) sowie ein Kraftstoff/Luft-Massenverhältnis eines der Brennkraftmaschine (1) zur Verbrennung zugeführten Gemisches herangezogen wird,
- **daß** die Kraftstoffmasse (KM) anhand von Betriebs-Parametern einer Kraftstoffeinspritzanlage (5) ermittelt wird.

2. Verfahren nach Anspruch 1,
**dadurch gekennzeichnet,**
**daß** das Kraftstoff/Luft-Massenverhältnis des Gemisches anhand von Signalwerten eines Sensors (8) ermittelt wird.

3. Verfahren nach Anspruch 2,
**dadurch gekennzeichnet,**
**daß** der Sensor eine in einem Abgasstrang (7) der Brennkraftmaschine (1) angeordnete Sonde (8), insbesondere eine λ-Sonde, ist, welche die Zusammensetzung von aus der Brennkraftmaschine (1) austretenden Abgasen analysiert.

4. Verfahren nach Anspruch 3,
**dadurch gekennzeichnet,**
**daß** die zur Ermittlung der Kraftstoffmasse (KM) verwendeten Betriebs-Parameter die Einspritzdauer und/oder der Einspritzdruck sind.

5. Verfahren nach einem der Ansprüche 1 bis 4,
**dadurch gekennzeichnet,**
**daß** die Brennkraftmaschine (1) zur Einstellung einer vorgegebenen Abgaszusammensetzung mit einer λ-Regelung zusammenwirkt, mit der das Kraftstoff/Luft-Massenverhältnis im Gemisch steuerbar und regelbar ist, wobei die λ-Regelung zur Veränderung der Abgaszusammensetzung das Kraftstoff/Luft-Massenverhältnis des Gemisches ändert, indem sie entsprechende Anpassungen der der Brennkraftmaschine (1) zugeführten Kraftstoffmasse (KM) veranlaßt, wobei die λ-Regelung zur Ermittlung des Kraftstoff/Luft-Massenverhältnisses eine λ-Sonde (8) aufweist und wobei das von dieser λ-Sonde (8) ermittelte Kraftstoff/Luft-Massenverhältnis zur Bestimmung der Ist-Luftmasse (LM_{Ist}) für den Luftmassen-Soll-Ist-Wert-Vergleich dient.

6. Verfahren nach einem der Ansprüche 1 bis 5,
**dadurch gekennzeichnet,**
**daß** die Ermittlung der Ist-Luftmasse (LM_{Ist}) bei Vorliegen einer stöchiometrischen Verbrennung der der Brennkraftmaschine (1) zugeführten Luftmasse (LM) und Kraftstoffmasse (KM) erfolgt.

7. Verfahren nach einem der vorhergehenden Ansprüche,
**dadurch gekennzeichnet,**
**daß** die Ermittlung der Ist-Luftmasse (LM_{Ist}) bei Vorliegen eines stationären oder quasistationären Betriebszustandes der Brennkraftmaschine (1) erfolgt.

8. Verfahren nach einem der Ansprüche 1 bis 7,
**dadurch gekennzeichnet,**
**daß** mit einem Luftmassensensor (4) in einem Ansaugstrang (2) der Brennkraftmaschine (1) eine weitere Luftmasse (LM) gemessen wird, wobei durch einen Vergleich der so gemessenen Luftmasse (LM) mit der aus der Kraftstoffmasse (KM) und dem Kraftstoff/Luft-Massenverhältnis ermittelten Ist-Luftmasse (LM_{Ist}) eine Diagnose des Ansaugstranges (2) und/oder Luftmassensensors (4) durchgeführt wird.

9. Verfahren nach einem der vorhergehenden Ansprüche,
**dadurch gekennzeichnet,**
**daß** aus der Kraftstoffmasse (KM) und dem Kraftstoff/Luft-Massenverhältnis ein Ist-Luftmassenwert berechnet wird, der die Ist-Luftmasse (LM_{Ist}) für den Luftmassen-Soll-Ist-Wert-Vergleich repräsentiert.

10. Verfahren nach einem der Ansprüche 1 bis 8,
**dadurch gekennzeichnet,**
**daß** zur Bestimmung der Ist-Luftmasse (LM_{Ist}) zum einen mittels eines Luftmassensensors (4) ein Luftmassenwert gemessen wird, zum anderen aus der Kraftstoffmasse (KM) und dem Kraftstoff/Luft-Massenverhältnis ein Referenzluftmassenwert berechnet wird, dann der gemessene Luftmassenwert anhand des berechneten Referenzluftmassenwertes korrigiert wird und schließlich ein Ist-Luftmassenwert gebildet wird, der die Ist-Luftmasse (LM_{Ist}) für den Luftmassen-Soll-Ist-Wert-Vergleich repräsentiert.

11. Verfahren nach Anspruch 8 oder 10,
**dadurch gekennzeichnet,**
**daß** der Luftmassensensor (4) vor einer Drosselklappe (3) im Ansaugstrang (2) angeordnet ist.

12. Verfahren nach einem der Ansprüche 8, 10 oder 11,
**dadurch gekennzeichnet,**
**daß** der Luftmassensenor (4) als Hitzdraht- oder Heißfilm-Luftmassenmesser ausgebildet ist.

## Claims

1. Method for torque setting on an internal combustion engine,
a control path (10) being provided, in which an assignment of a torque (M) to an air mass (LM) and of an air mass (LM) to a throttle-valve position (W) takes place,
by means of the control path (10) a desired air mass (LM_{des}) being determined from a desired torque (M_{des}) to be set, and an associated throttle-valve position (W) being determined and set,
an actual air mass (LM_{act}) supplied for combustion to the internal combustion engine (1) being determined,
a deviation between the desired air mass (LM_{des}) and the actual air mass (LM_{act}) being determined by means of an air-mass desired/actual-value comparison,
for this deviation a correction value (K) being determined, by means of which an adaptation of the control path (10) to the deviation takes place in such a way that, in the control path (10), a desired torque (M_{des}) to be set is then assigned a correspondingly adapted throttle-valve position (W) which brings about a compensation of the previously determined deviation between the desired air mass (LM_{des}) and the actual air mass (LM_{act}),
**characterized**
- **in that** a current fuel mass (KM) supplied for combustion to the internal combustion engine (1) and a fuel/air mass ratio of a mixture supplied for combustion to the internal combustion engine (1) are used in order to determine the actual air mass (LM_{act}), and
- **in that** the fuel mass (KM) is determined by means of operating parameters of a fuel injection system (5).

2. Method according to Claim 1, **characterized in that** the fuel/air mass ratio of the mixture is determined by means of signal values from a sensor (8).

3. Method according to Claim 2, **characterized in that** the sensor is a probe (8), in particular a λ-probe, which is arranged in an exhaust train (7) of the internal combustion engine (1) and which analyzes the composition of exhaust gases emerging from the internal combustion engine (1).

4. Method according to Claim 3, **characterized in that** the operating parameters used in order to determine the fuel mass (KM) are the injection duration and/or the injection pressure.

5. Method according to one of Claims 1 to 4, **characterized in that**, for setting a predetermined exhaust-gas composition, the internal combustion engine (1) interacts with a λ-control, by means of which the fuel/air mass ratio in the mixture can be controlled and regulated, the λ-control changing the fuel/air mass ratio of the mixture in order to vary the exhaust-gas composition by inducing corresponding adaptations of the fuel mass (KM) supplied to the internal combustion engine (1), the λ-control having a λ-probe (8) for determining the fuel/air mass ratio, and the fuel/air mass ratio determined by this λ-probe (8) serving for determining the actual air mass (LM_{act}) for the air-mass desired/actual-value comparison.

6. Method according to one of Claims 1 to 5, **characterized in that** the determination of the actual air mass (LM_{act}) takes place in the presence of a stoichiometric combustion of the air mass (LM) and fuel mass (KM) which are supplied to the internal combustion engine (1).

7. Method according to one of the preceding claims, **characterized in that** the determination of the actual air mass (LM_{act}) takes place in the presence of a stationary or quasi-stationary operating state of the internal combustion engine (1).

8. Method according to one of Claims 1 to 7, **characterized in that** a further air mass (LM) is measured by means of an air-mass sensor (4) in an intake train (2) of the internal combustion engine (1), a diagnosis of the intake train (2) and/or air-mass sensor (4) being carried out by means of a comparison of the air mass (LM) thus measured with the actual air mass (LM_{act}) determined from the fuel mass (KM) and from the fuel/air mass ratio.

9. Method according to one of the preceding claims, **characterized in that** an actual air-mass value which represents the actual air mass (LM_{act}) for the air-mass desired/actual-value comparison is calculated from the fuel mass (KM) and from the fuel/air mass ratio.

10. Method according to one of Claims 1 to 8, **characterized in that**, in order to determine the actual air mass (LM_{act}) on the one hand, an air-mass value is measured by means of an air-mass sensor (4) and, on the other hand, a reference air-mass value is calculated from the fuel mass (KM) and from the fuel/air mass ratio, the measured air-mass value is then corrected by means of the calculated reference air-mass value, and, finally, an actual air-mass value is formed which represents the actual air mass (LM_{act}) for the air-mass desired/actual-value comparison.

11. Method according to Claim 8 or 10, **characterized in that** the air-mass sensor (4) is arranged upstream of a throttle valve (3) in the intake train (2).

12. Method according to one of Claims 8, 10 and 11, **characterized in that** the air-mass sensor (4) is designed as a hot-wire or hot-film air-mass meter.

## Revendications

1. Procédé pour régler le couple sur un moteur à combustion interne, un chemin de commande (10) étant prévu dans lequel un couple (M) est associé à une masse d'air (LM) et une masse d'air (LM) est associée à une position du clapet d'étranglement (W), une masse d'air de consigne (LM_{Soll}) étant déterminée au moyen du chemin de commande (10) à partir d'un couple de consigne (M_{Soll}) à régler et une position correspondante du clapet d'étranglement (W) étant déterminée et réglée, une masse d'air réelle (LM_{Ist}) acheminée au moteur à combustion interne (1) pour la combustion étant déterminée, un écart entre la masse d'air de consigne (LM_{Soll}) et la masse d'air réelle (LM_{Ist}) étant déterminé par une comparaison des valeurs de consigne et réelle de la masse d'air, une valeur de correction (K) étant déterminée pour cet écart, avec laquelle est effectuée une adaptation du chemin de commande (10) en fonction de l'écart de telle sorte que dans le chemin de commande (10) un réglage adapté en conséquence du clapet d'étranglement (W) soit associé à un couple de consigne (M_{Soll}) à régler, lequel effectue une compensation de l'écart déterminé précédemment entre la masse d'air de consigne (LM_{Soll}) et la masse d'air réelle (LMᵢₛₜ), **caractérisé en ce que**
- pour déterminer la masse d'air réelle (LMᵢₛₜ), on utilise une masse de carburant (KM) actuelle acheminée au moteur à combustion interne (1) pour la combustion ainsi qu'un rapport massique carburant/air d'un mélange acheminé au moteur à combustion interne (1) pour la combustion,
- la masse de carburant (KM) est déterminée au moyen de paramètres de fonctionnement d'un équipement d'injection de carburant (5).

2. Procédé selon la revendication 1, **caractérisé en ce que** le rapport massique carburant/air du mélange est déterminé au moyen des valeurs du signal d'un capteur (8).

3. Procédé selon la revendication 2, **caractérisé en ce que** le capteur est une sonde (8), notamment une sonde λ, disposée dans une branche d'échappement (7) du moteur à combustion interne (1) qui analyse la composition des gaz d'échappement sortant du moteur à combustion interne (1).

4. Procédé selon la revendication 3, **caractérisé en ce que** les paramètres de fonctionnement utilisés pour déterminer la masse de carburant (KM) sont la durée d'injection et/ou la pression d'injection.

5. Procédé selon l'une des revendications 1 à 4, **caractérisé en ce que** le moteur à combustion interne (1), pour régler une composition prédéfinie des gaz d'échappement, agit conjointement avec un régulateur λ qui permet de commander et de réguler le rapport massique carburant/air dans le mélange, le régulateur λ, pour modifier la composition des gaz d'échappement, modifiant le rapport massique carburant/air du mélange en commandant des adaptations en conséquence de la masse de carburant (KM) acheminée au moteur à combustion interne (1), le régulateur λ présentant une sonde λ (8) pour déterminer le rapport massique carburant/air et le rapport massique carburant/air déterminé par cette sonde λ (8) servant à déterminer la masse d'air réelle (LM_{Ist}) pour la comparaison des valeurs de consigne et réelle de la masse d'air.

6. Procédé selon l'une des revendications 1 à 5, **caractérisé en ce que** la détermination de la masse d'air réelle (LM_{Ist}) s'effectue en présence d'une combustion stoechiométrique de la masse d'air (LM) et de la masse de carburant (KM) acheminées au moteur à combustion interne (1).

7. Procédé selon l'une des revendications précédentes, **caractérisé en ce que** la détermination de la masse d'air réelle (LM_{Ist}) s'effectue en présence d'un état de fonctionnement stationnaire ou quasi-stationnaire du moteur à combustion interne (1).

8. Procédé selon l'une des revendications 1 à 7, **caractérisé en ce qu'**une masse d'air supplémentaire (LM) est mesurée avec un capteur de masse d'air (4) dans une branche d'admission (2) du moteur à combustion interne (1), un diagnostic de la branche d'admission (2) et/ou du capteur de masse d'air (4) étant effectué en comparant la masse d'air (LM) ainsi mesurée avec la masse d'air réelle (LM_{Ist}) déterminée à partir de la masse de carburant (KM) et du rapport massique carburant/air.

9. Procédé selon l'une des revendications précédentes, **caractérisé en ce qu'**à partir de la masse de carburant (KM) et du rapport massique carburant/air est calculée une valeur de la masse d'air qui représente la masse d'air réelle (LM_{Ist}) pour la comparaison des valeurs de consigne et réelle de la masse d'air.

10. Procédé selon l'une des revendications 1 à 8, **caractérisé en ce que** la détermination de la masse d'air réelle (LM_{Ist}) s'effectue d'une part en mesurant une valeur de masse d'air au moyen d'un capteur de masse d'air (4), d'autre part en calculant une valeur de masse d'air de référence à partir de la masse de carburant (KM) et du rapport massique carburant/air, en corrigeant ensuite la valeur de la masse d'air au moyen de la valeur de masse d'air de référence calculée et en calculant finalement une valeur de masse d'air réelle qui représente la masse d'air réelle (LM_{Ist}) pour la comparaison des valeurs de consigne et réelle de la masse d'air.

11. Procédé selon la revendication 8 ou 10, **caractérisé en ce que** le capteur de masse d'air (4) est disposé devant un clapet d'étranglement (3) dans la branche d'admission (2).

12. Procédé selon l'une des revendications 8, 10 ou 11, **caractérisé en ce que** le capteur de masse d'air (4) est réalisé sous la forme d'un capteur de masse d'air à fil chauffant ou à film chauffant.
